# EUROPÄISCHE PATENTSCHRIFT

(11) **EP 3 793 777 B1**
(45) Veröffentlichungstag und Bekanntmachung des Hinweises auf die Patenterteilung: **09.10.2024**
(21) Anmeldenummer: 19725312.3
(22) Anmeldetag: 15.05.2019
(51) Int. Cl.: B25J 5/00, B25J 9/00, B25J 9/16, B25J 13/08, B25J 11/00

(54) **HANDHABUNG, INSBESONDERE TRANSPORT VON GÜTERN, INSBESONDERE WAFERN, DURCH EINEN ROBOTER**
HANDLING, IN PARTICULAR TRANSPORT OF GOODS, IN PARTICULAR WAFERS, BY A ROBOT
LA MANIPULATION, EN PARTICULIER LE TRANSPORT DE MARCHANDISES, EN PARTICULIER DE PLAQUETTES, PAR UN ROBOT

(30) Priorität: 18.05.2018 DE 102018207826
(43) Veröffentlichungstag der Anmeldung: 24.03.2021
(73) Patentinhaber: KUKA Deutschland GmbH, 86165 Augsburg (DE)
(72) Erfinder: GLATZ, Hans, 86179 Augsburg (DE); BLOCK, Erich, 86163 Augsburg (DE); AKBAS, Adil, 86179 Augsburg (DE)
(74) Vertreter: Oelke, Jochen
(86) Internationale Anmeldenummer: PCT/EP2019/062415
(87) Internationale Veröffentlichungsnummer: WO 2019/219720

(56) Entgegenhaltungen:
- JP-A- H0 531 688
- JP-A- H07 186 968
- JP-A- H09 216 180
- US-A1- 2018 065 806
- US-B1- 6 430 473
- US-B1- 9 757 859
- ALBU-SCHAFFER A ET AL: "Soft robotics", IEEE ROBOTICS & AUTOMATION MAGAZINE, IEEE SERVICE CENTER, PISCATAWAY, NJ, US, vol. 15, no. 3, 1 September 2008 (2008-09-01), pages 20 - 30, XP011234448, ISSN: 1070-9932, DOI: 10.1109/MRA.2008.927979

## Beschreibung

Die vorliegende Erfindung betrifft ein Verfahren zum Transportieren, von Gütern, insbesondere Wafern, durch einen Roboter sowie einen Roboter und ein Computerprogrammprodukt zur Durchführung des Verfahrens.

Die Dokumente JP H05 31688 A und US 9 757 859 B1 zeigen relevante Roboter zum Transport von Gütern, JP H07 186968 A offenbart ein Verfahren und einen Roboter nach dem Oberbegriff der Ansprüche 1 und 9.

Aufgabe der vorliegenden Erfindung ist es, die Handhabung, insbesondere den Transport, von Gütern durch Roboter zu verbessern.

Diese Aufgabe wird durch ein Verfahren mit den Merkmalen des Anspruchs 1 gelöst. Ansprüche 9, 10 stellen einen Roboter bzw. ein Computerprogrammprodukt zur Durchführung eines hier beschriebenen Verfahrens unter Schutz. Die Unteransprüche betreffen vorteilhafte Weiterbildungen.

Nach einer Ausführung der vorliegenden Erfindung weist ein Roboter zum Transport von Gütern eine mobile Plattform, einen mehrachsigen Roboterarm und eine Steuerung auf, die Antriebe des Roboterarms kommandiert bzw. hierzu eingerichtet ist bzw. verwendet wird.

Nach einer Ausführung der vorliegenden Erfindung wird der Roboterarm in einem Schontransportmodus während einer Transportbewegung der Plattform, insbesondere einer Transportbewegung der Plattform, in der diese durch (ihre) Antriebe bewegt, in einer Ausführung verfahren, wird, derart nachgiebig geregelt, dass Beschleunigungen, insbesondere Schwingungen, des Roboters, insbesondere der Plattform, reduziert werden bzw. sind, insbesondere verglichen mit derselben Transportbewegung der Plattform bei steif geregeltem oder, insbesondere durch Bremsen, blockiertem Roboterarm, in einer Ausführung um wenigstens 10%, insbesondere wenigstens 25%. in einer Ausführung kann hierzu von wenigstens einem weiteren Betriebsmodus, insbesondere einem Betriebsmodus, in dem die Plattform ebenfalls durch ihre Antriebe bewegt wird, in den Schontransportmodus und/oder umgekehrt von dem Schontransportmodus in wenigstens einen weiteren Betriebsmodus, insbesondere einen Betriebsmodus, in dem die Plattform ebenfalls durch ihre Antriebe bewegt wird, umgeschaltet werden, in einer Ausführung durch eine Bedienereingabe und/oder automatisch, insbesondere auf Basis einer kommandierten Bewegung der Plattform, wobei in einer Ausführung in diesem weiteren Betriebsmodus der Roboterarm nicht oder anders(artig), insbesondere weniger, nachgiebig geregelt wird.

Zur Reduzierung von Beschleunigungen, insbesondere Schwingungen, sind an sich sogenannte Schwingungsdämpfer, insbesondere (Schwingungs)Tilger, bekannt, die in einer Ausführung hardwaremäßig ausgebildete Feder-Dämpfer-Anordnungen aufweisen.

Auf der anderen Seite ist es an sich bekannt, Roboterarme nachgiebig zu regeln, insbesondere derart, dass sie regelungstechnisch eine Feder-Dämpfer-Anordnung nachbilden.

Der vorliegenden Erfindung liegt nun die Idee zugrunde, einen solchen nachgiebig geregelten Roboterarm eines mobilen Roboters während einer Transportbewegung als Schwingungsdämpfer, insbesondere (Schwingungs)Tilger, zu verwenden.

Dadurch können in einer Ausführung dynamische Belastungen der transportierten Güter reduziert und diese so geschont werden.

Die vorliegende Erfindung wird mit besonderem Vorteil zum vollständig oder teilweise automatisierten Transport von Wafern mittels mobiler Roboter verwendet, da diese gegenüber dynamischen Belastungen besonders empfindlich sind, ohne dass die vorliegenden Erfindung hierauf eingeschränkt wäre.

In einer Ausführung wird in dem Schontransportmodus in einem oder mehreren Gelenken des Roboterarms (jeweils) eine, insbesondere trägheitsbedingte, Last, in einer Ausführung ein Drehmoment, erfasst und Bewegungen des (jeweiligen) Gelenks auf Basis bzw. in Abhängigkeit von dieser erfassten Last aktuiert, insbesondere der Antrieb des (jeweiligen) Gelenks auf Basis bzw. in Abhängigkeit von dieser erfassten Last kommandiert. In einer Ausführung ist die (kommandierte) Bewegung des (jeweiligen) Gelenks eine, insbesondere zur erfassten Last gegensinnige, Gegen- bzw. Ausgleichsbewegung zur erfassten Last bzw. derart, dass durch sie eine zur erfassten Last gegensinnige Last bzw. Beschleunigung bewirkt wird.

Hierdurch können in einer Ausführung dynamische Lasten während des Transports erfasst und hieraus resultierende Beschleunigungen, insbesondere Schwingungen, durch entsprechende (Gelenk)Bewegungen des Roboterarms reduziert werden.

In einer Ausführung wird der Roboterarm in dem Schontransportmodus impedanzgeregelt. Hierunter wird vorliegend insbesondere in fachüblicher Weise verstanden, dass regelungstechnisch ein oder mehrere Gelenke des Roboterarms und/oder eine roboterarmfeste Referenz, insbesondere der TCP, durch eine oder mehrere virtuelle Federn und/oder, in einer Ausführung geschwindigkeitsabhängige, insbesondere -proportionale, Dämpfer, insbesondere in verschiedenen Raumrichtungen und/oder Freiheitsgraden, an eine vorgegebene Soll-Stellung bzw. Soll-Pose gefesselt wird/werden bzw. ist/sind, wobei in einer Ausführung eine Federsteifigkeit der virtuellen Feder(n) und/oder ein Dämpfungsverhalten, insbesondere eine Dämpferkonstante, des bzw. der virtuellen Dämpfer(s) durch eine Bedienereingabe eingestellt ist/sind bzw. wird/werden (kann/können). Der nachgiebig geregelte Roboterarm kann in einer Ausführung manuell aus dieser Soll-Pose bzw. diesen Soll-Stellungen ausgelenkt werden, wobei die Steuerung bzw. durch sie kommandierte Antriebe des Roboterarms den Roboterarm in diese Soll-Pose bzw. -Stellungen zurückzustellen suchen bzw. entsprechende Antriebskräfte und/oder -momente aufprägen, die in einer Ausführung auf Basis der entsprechenden Auslenkungen der bzw. des virtuellen Feder(n) bzw. Dämpfer(s) ermittelt bzw. kommandiert werden, in einer Ausführung auf Basis eines dynamischen Modells des Roboter(arm)s. Entsprechend wird in einer Ausführung in dem Schontransportmodus der Roboterarm auf Basis einer Referenzpose geregelt, welche in einer Ausführung der Pose des Roboterarms beim Aktivieren des bzw. Umschalten in den Schontransportmodus entspricht.

In einer Ausführung weist der Roboterarm wenigstens sechs Achsen bzw. Gelenke, insbesondere Drehgelenke, auf. Hierdurch können in einer Ausführung vorteilhaft Beschleunigungen, insbesondere Schwingungen, des Roboters, insbesondere der Plattform, in unterschiedlichen Raumrichtungen bzw., insbesondere allen sechs, Freiheitsgraden reduziert werden. In einer Weiterbildung weist der Roboterarm wenigstens sieben Achsen bzw. Gelenke, insbesondere Drehgelenke, auf. Hierdurch können in einer Ausführung Beschleunigungen, insbesondere Schwingungen, des Roboters, insbesondere der Plattform, in unterschiedlichen Raumrichtungen bzw.

(allen) Freiheitsgraden besonders vorteilhaft reduziert werden, insbesondere in unterschiedlichsten Posen des Roboterarms, bzw. dieser in zum Transport besonders geeignete Posen gebracht werden.

In einer Ausführung ist ein Endeffektor, insbesondere Greifer, in einer Ausführung (unaktuierter) Passivgreifer, des Roboterarms im Schontransportmodus leer bzw. frei von Nutzlasten. Dadurch können in einer Ausführung dynamische Belastungen der transportierten Güter besonders vorteilhaft reduziert werden, da durch bzw. bei Bewegungen des nachgiebig geregelten Roboterarms keine transportierten Güter mitbewegt werden.

In einer Ausführung weist die Plattform ein Fahrwerk, insbesondere mit Raupen, Ketten, einem oder mehreren omnidirektionalen Rädern, insbesondere Mecanum- oder Allseitenrädern, und/oder einem oder mehreren lenkbaren Rädern, auf. Bei solchen mobilen Plattformen können beim Transport jeweils höhere dynamische Belastungen auftreten, so dass die vorliegende Erfindung bei diesen jeweils mit besonderem Vorteil verwendet werden kann.

Erfindungsgemäß sind bzw. werden die transportierten Güter in einem oder mehreren, in einer Ausführung abgedichteten, Behältern gelagert, der bzw. die zerstörungsfrei lösbar an, insbesondere auf, der Plattform angeordnet, insbesondere abgestellt und/oder, insbesondere form- und/oder reibschlüssig, fixiert sind bzw. werden, insbesondere gegen ein Verrutschen. Bei in Behältern gelagerten Gütern, insbesondere Wafern, können beim Transport jeweils höhere dynamische Belastungen auftreten, so dass die vorliegende Erfindung bei diesen jeweils mit besonderem Vorteil verwendet werden kann.

In einer Ausführung handhabt, insbesondere greift, hält und/oder transportiert, der Roboterarm den bzw. einen oder mehrere Behälter vor und/oder nach dem Schontransportmodus, in einer Ausführung wenigstens zeitweise nicht oder anders(artig), insbesondere weniger, nachgiebig geregelt. Entsprechend wird in einer Ausführung von einem (weiteren) Betriebsmodus, in dem der Roboterarm den bzw. einen oder mehrere Behälter handhabt, insbesondere greift, hält und/oder transportiert, und in dem er nicht oder anders(artig), insbesondere weniger, nachgiebig geregelt wird, in den Schontransportmodus umgeschaltet bzw. umgekehrt von dem Schontransportmodus in einen Betriebsmodus umgeschaltet, in dem der Roboterarm den bzw. einen oder mehrere Behälter handhabt, insbesondere greift, hält und/oder transportiert, und in dem er nicht oder anders(artig), insbesondere weniger, nachgiebig geregelt wird, in einer Ausführung (jeweils) durch eine Bedienereingabe und/oder automatisch umgeschaltet, insbesondere auf Basis einer kommandierten Bewegung der Plattform. In einer Weiterbildung ordnet der Roboterarm vor und/oder nach dem Schontransportmodus den bzw. einen oder mehrere Behälter an einer Schleuse an und/oder belädt die Plattform mit einen oder mehrere Behältern und/oder entlädt einen oder mehrere Behälter von der Plattform. Hierdurch kann in einer Ausführung der (jeweilige) Behälter vorteilhaft gehandhabt, insbesondere exakt(er) platziert, werden.

Nach einer Ausführung der vorliegenden Erfindung ist ein Roboter, insbesondere hard- und/oder software-, insbesondere programmtechnisch, zur Durchführung eines hier beschriebenen Verfahrens eingerichtet bzw. weist seine Steuerung den hier beschriebenen Schontransportmodus auf bzw. ist in diesen umschaltbar, insbesondere von einem hier beschriebenen anderen Betriebsmodus.

In einer Ausführung weist der Roboter bzw. seine Steuerung auf:
- Mittel zum Erfassen einer Last in wenigstens einem Gelenk des Roboterarms und Aktuieren eine Bewegung des Gelenks auf Basis dieser erfassten Last in dem Schontransportmodus; und/oder
- Mittel zur Impedanzregelung des Roboterarms in dem Schontransportmodus; und/oder
- Mittel zum Regeln des Roboterarms auf Basis einer Referenzpose in dem Schontransportmodus; und/oder
- Mittel zum Handhaben des Behälters vor und/oder nach dem Schontransportmodus mit dem Roboterarm, insbesondere zum Anordnen des Behälters an einer Schleuse.

Ein Mittel im Sinne der vorliegenden Erfindung kann hard- und/oder softwaretechnisch ausgebildet sein, insbesondere eine, vorzugsweise mit einem Speicher- und/oder Bussystem daten- bzw. signalverbundene, insbesondere digitale, Verarbeitungs-, insbesondere Mikroprozessoreinheit (CPU) und/oder ein oder mehrere Programme oder Programmmodule aufweisen. Die CPU kann dazu ausgebildet sein, Befehle, die als ein in einem Speichersystem abgelegtes Programm implementiert sind, abzuarbeiten, Eingangssignale von einem Datenbus zu erfassen und/oder Ausgangssignale an einen Datenbus abzugeben. Ein Speichersystem kann ein oder mehrere, insbesondere verschiedene, Speichermedien, insbesondere optische, magnetische, Festkörper- und/oder andere nicht-flüchtige Medien aufweisen. Das Programm kann derart beschaffen sein, dass es die hier beschriebenen Verfahren verkörpert bzw. auszuführen imstande ist, sodass die CPU die Schritte solcher Verfahren ausführen kann und damit insbesondere den Roboter steuern bzw. regeln kann. Ein Computerprogrammprodukt kann in einer Ausführung ein, insbesondere nicht-flüchtiges, Speichermedium zum Speichern eines Programms bzw. mit einem darauf gespeicherten Programm aufweisen, insbesondere sein, wobei ein Ausführen dieses Programms ein System bzw. eine Steuerung, insbesondere einen Computer, dazu veranlasst, ein hier beschriebenes Verfahren bzw. einen oder mehrere seiner Schritte auszuführen.

In einer Ausführung werden ein oder mehrere, insbesondere alle, Schritte des Verfahrens vollständig oder teilweise automatisiert durchgeführt, insbesondere durch den Roboter bzw. seine Steuerung bzw. dessen bzw. deren Mittel.

Parameter der Impedanzregelung im Schontransportmodus, insbesondere Steifigkeit(en) bzw. Dämpfung(en) der bzw. des virtuellen Feder(n) bzw. Dämpfer(s), werden in einer Ausführung empirisch ermittelt und in der Steuerung entsprechend eingestellt, insbesondere eingegeben bzw. gespeichert.

Weitere Vorteile und Merkmale ergeben sich aus den Unteransprüchen und den Ausführungsbeispielen. Hierzu zeigt, teilweise schematisiert:
- Fig. 1:: einen Roboter nach einer Ausführung der vorliegenden Erfindung in einer Seitansicht in einem Schontransportmodus;
- Fig. 2:: den Roboter im Schontransportmodus in einer perspektivischen Ansicht;
- Fig. 3:: den Roboter in einer Fig. 2 entsprechenden Ansicht in einem weiteren Betriebsmodus; und
- Fig. 4:: ein Verfahren zum Transport von Wafern durch den Roboter nach einer Ausführung der vorliegenden Erfindung.

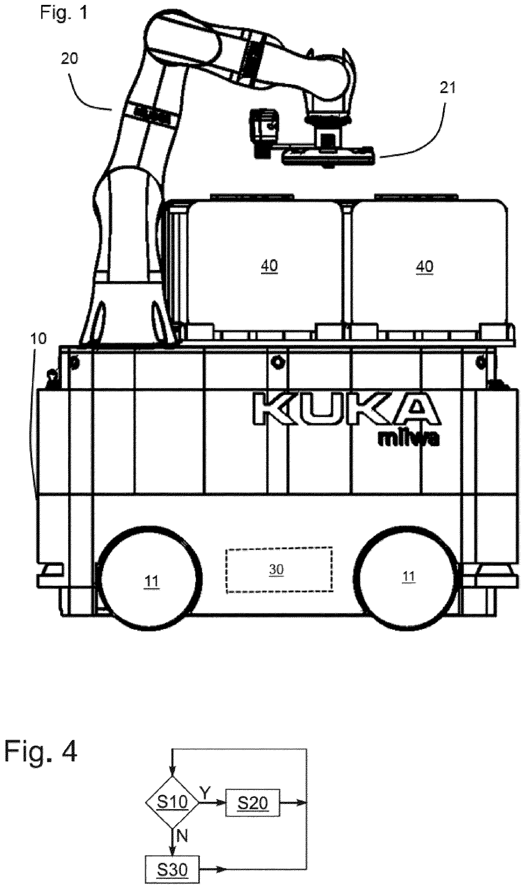

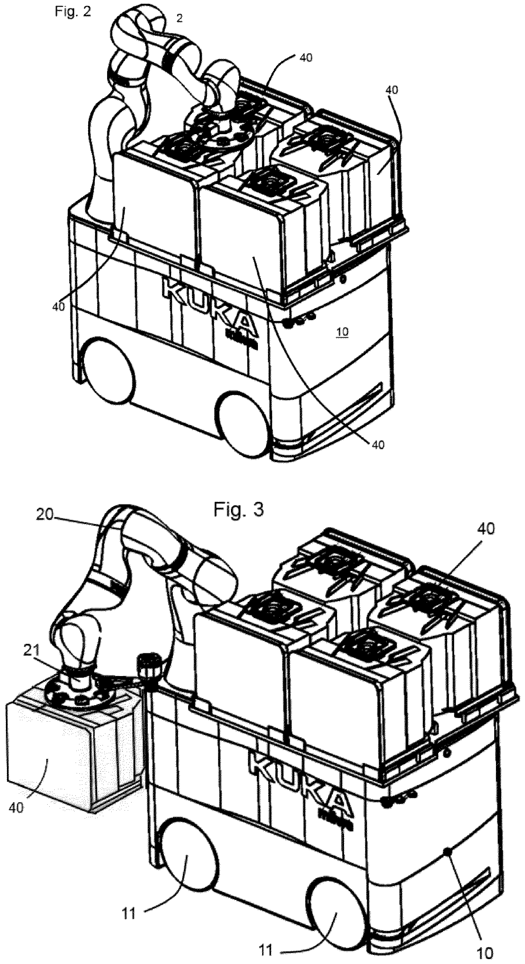

Fig. 1, 2 zeigen einen Roboter nach einer Ausführung der vorliegenden Erfindung in einer perspektivischen (Fig. 2) bzw. Seitansicht (Fig. 1) in einem Schontransportmodus, Fig. 3 den Roboter in einem weiteren Betriebsmodus, in dem sein Roboterarm einen sogenannten FOUP-Behälter ("Front Opening Unified/Universal Pod") 40 mit Wafern handhabt.

Der Roboter weist eine mobile Plattform 10 mit Mecanum-Rädern 11, einen siebenachsigen Roboterarm 20 mit einem Greifer 21, und eine Steuerung 30 zum Kommandieren von (in den Fign. nicht sichtbaren) Antrieben des Roboterarms 20 auf.

In dem weiteren Betriebsmodus (Fig. 3) handhabt der Roboterarm die Behälter 40, ordnet beispielsweise einen der Behälter 40 an einer Schleuse eines Reinraums (nicht dargestellt) an, um Wafer zu be- und/oder entladen.

Nach einer Ausführung der vorliegenden Erfindung prüft die Steuerung 30 in einem Schritt S10 (vgl. Fig. 4), ob von dem vorstehend beschriebenen weiteren Betriebsmodus in einen Schontransportmodus umgeschaltet worden bzw. der Schontransportmodus aktiviert ist.

Ist dies der Fall (S10: "Y"), wird der Roboterarm 20 bei leerem Greifer 21 in dem Schontransportmodus bzw. einem Schritt S20 impedanzgeregelt, indem bzw. wobei der Greifer 21 regelungstechnisch bzw. durch entsprechende Kommandierung der Antriebe des Roboterarms 20 durch die Steuerung 30 durch virtuelle Federn und Dämpfern in den drei Raumrichtungen und -orientierungen an die beim Umschalten erfasste Pose des Greifers 21 gefesselt wird.

In diesem Schontransportmodus werden Stöße, die beim Transport auf die Plattform 10 wirken und somit sowohl auf den Roboterarm 20 als auch die Behälter 40 und darin gelagerten Wafer übertragen werden, durch Momentensensoren in den Gelenken des Roboterarms 20 erfasst und eine Gegenbewegung bzw. -beschleunigung durch den Roboterarm 20 erzeugt, um Beschleunigungen, insbesondere Schwingungen, der Plattform 10 und somit auch der Behälter 40 bzw. darin gelagerten Wafer zu reduzieren.

Durch die Impedanzregelung mit entsprechend, in einer Ausführung empirisch, gewählten virtuellen Steifigkeiten und Dämpfungen fungiert bzw. reagiert der Roboterarm 20 als Schwingungsdämpfer.

Ist der Schontransportmodus nicht aktiviert bzw. aus diesem in einen anderen, insbesondere den weiteren, Betriebsmodus umgeschaltet (S10: "N"), wird der Roboterarm 20 in diesem Betriebsmodus bzw. einem Schritt S30 beispielsweise steif positionsgeregelt, um Behälter von der oder auf die Plattform zu laden, die Schleuse anzufahren oder den mobilen Roboter bzw. die mobile Plattform 10 am Roboterarm 20 handzuführen oder den leeren mobilen Roboter schneller und/oder energieärmer zu verfahren oder dergleichen.

Obwohl in der vorhergehenden Beschreibung exemplarische Ausführungen erläutert wurden, sei darauf hingewiesen, dass eine Vielzahl von Abwandlungen möglich ist. So können neben dem Schontransportmodus (vgl. Fig. 4: S20) und dem anderen Betriebsmodus (vgl. Fig. 4: S30) natürlich noch weitere Modi des Roboters bzw. seiner Steuerung 30 vorgesehen sein.

Außerdem sei darauf hingewiesen, dass es sich bei den exemplarischen Ausführungen lediglich um Beispiele handelt, die den Schutzbereich, die Anwendungen und den Aufbau in keiner Weise einschränken sollen. Vielmehr wird dem Fachmann durch die vorausgehende Beschreibung ein Leitfaden für die Umsetzung von mindestens einer exemplarischen Ausführung gegeben, wobei diverse Änderungen, insbesondere in Hinblick auf die Funktion und Anordnung der beschriebenen Bestandteile, vorgenommen werden können, ohne den Schutzbereich zu verlassen, wie er sich aus den Ansprüchen ergibt.

### Bezugszeichenliste

- 10: mobile Plattform
- 11: Mecanum-Rad
- 20: Roboterarm
- 21: Greifer (Endeffektor)
- 30: Steuerung
- 40: FOUP

## Patentansprüche

1. Verfahren zum Transport von Gütern, insbesondere Wafern, durch einen Roboter, der eine mobile Plattform (10), einen mehrachsigen Roboterarm (20) und eine Steuerung (30) zum Kommandieren von Antrieben des Roboterarms aufweist, wobei die transportierten Güter in einem oder mehreren Behältern (40) gelagert werden, der bzw. die zerstörungsfrei lösbar an der Plattform (10) angeordnet werden, **dadurch gekennzeichnet, dass** der Roboterarm in einem Schontransportmodus (S20) während einer Transportbewegung der Plattform, insbesondere bei freiem Endeffektor (21), zur Reduzierung von Beschleunigungen, insbesondere Schwingungen der Plattform, nachgiebig geregelt wird.

2. Verfahren nach Anspruch 1, **dadurch gekennzeichnet, dass** in dem Schontransportmodus in wenigstens einem Gelenk des Roboterarms eine Last erfasst und auf Basis dieser erfassten Last eine Bewegung des Gelenks aktuiert wird (S20).

3. Verfahren nach einem der vorhergehenden Ansprüche, **dadurch gekennzeichnet, dass** der Roboterarm in dem Schontransportmodus impedanzgeregelt wird (S20).

4. Verfahren nach einem der vorhergehenden Ansprüche, **dadurch gekennzeichnet, dass** in dem Schontransportmodus der Roboterarm auf Basis einer Referenzpose geregelt wird (S20).

5. Verfahren nach einem der vorhergehenden Ansprüche, **dadurch gekennzeichnet, dass** der Roboterarm (20) wenigstens sechs, insbesondere wenigstens sieben, Achsen aufweist.

6. Verfahren nach einem der vorhergehenden Ansprüche, **dadurch gekennzeichnet, dass** die Plattform (10) ein Fahrwerk, insbesondere mit wenigstens einem omnidirektionalen oder lenkbaren Rad (11), aufweist.

7. Verfahren nach einem der vorhergehenden Ansprüche, **dadurch gekennzeichnet, dass** transportierte Güter in wenigstens einem, insbesondere abgedichteten, Behälter (40) gelagert sind, der zerstörungsfrei lösbar an der Plattform (10) angeordnet ist.

8. Verfahren nach dem vorhergehenden Anspruch, **dadurch gekennzeichnet, dass** der Roboterarm (209 den Behälter (40) vor und/oder nach dem Schontransportmodus handhabt, insbesondere an einer Schleuse anordnet und/oder auf die Plattform lädt und/oder von dieser entlädt (S30).

9. Roboter, der zur Durchführung eines Verfahrens nach Anspruch 1 eingerichtet ist und eine mobile Plattform (10), einen mehrachsigen Roboterarm (20) und eine Steuerung (30) zum Kommandieren von Antrieben des Roboterarms aufweist, wobei die transportierten Güter in einem oder mehreren Behältern (40) gelagert sind, der bzw. die zerstörungsfrei lösbar an der Plattform (10) angeordnet sind,
**dadurch gekennzeichnet, dass** die Steuerung einen Schontransportmodus aufweist, in dem der Roboterarm während einer Transportbewegung der Plattform, insbesondere bei freiem Endeffektor (21), zur Reduzierung von Beschleunigungen, insbesondere Schwingungen der Plattform, nachgiebig geregelt wird.

10. Computerprogrammprodukt mit einem Programmcode, der auf einem von einem Computer lesbaren Medium gespeichert ist, zur Durchführung eines Verfahrens nach einem der Ansprüche 1 - 8.

## Claims

1. Method for transporting goods, in particular wafers, by way of a robot that has a mobile platform (10), a multiaxis robot arm (20) and a controller (30) for controlling drives of the robot arm, the transported goods being stored in one or more containers (40) that are arranged on the platform (10) in a nondestructively detachable manner, **characterized in that** in a protection transport mode (S20) the robot arm is controlled in a yielding manner during a transport movement of the platform, in particular when an end effector (21) is free, in order to reduce accelerations, in particular vibrations, of the platform.

2. Method according to Claim 1, **characterized in that** a load in at least one joint of the robot arm is detected in the protection transport mode and this detected load is taken as a basis for actuating a movement of the joint (S20) .

3. Method according to either of the preceding claims, **characterized in that** the robot arm is impedance-controlled in the protection transport mode (S20).

4. Method according to one of the preceding claims, **characterized in that** the robot arm is controlled on the basis of a reference pose in the protection transport mode (S20).

5. Method according to one of the preceding claims, **characterized in that** the robot arm (20) has at least six, in particular at least seven, axes.

6. Method according to one of the preceding claims, **characterized in that** the platform (10) has a chassis, in particular having at least one omnidirectional or steerable wheel (11).

7. Method according to one of the preceding claims, **characterized in that** transportable goods are stored in at least one, in particular sealed, container (40) that is arranged on the platform (10) in a nondestructively detachable manner.

8. Method according to the preceding claim, **characterized in that** the robot arm (209) handles the container (40) before and/or after the protection transport mode, in particular arranges said container on a double door system and/or loads said container onto the platform and/or unloads said container from said platform (S30) .

9. Robot that is designed to carry out a method according to Claim 1 and has a mobile platform (10), a multiaxis robot arm (20) and a controller (30) for controlling drives of the robot arm, the transported goods being stored in one or more containers (40) that are arranged on the platform (10) in a nondestructively detachable manner, **characterized in that** the controller has a protection transport mode in which the robot arm is controlled in a yielding manner during a transport movement of the platform, in particular when an end effector (21) is free, in order to reduce accelerations, in particular vibrations, of the platform.

10. Computer program product having a program code, which is stored on a medium that is able to be read by a computer, in order to carry out a method according to one of Claims 1 - 8.

## Revendications

1. Procédé de transport de marchandises, en particulier de plaquettes, par un robot qui présente une plate-forme mobile (10), un bras robotisé (20) à plusieurs axes et une commande (30) pour commander des systèmes d'entraînement du bras robotisé, les marchandises transportées étant stockées dans un ou plusieurs récipients (40) qui sont disposés de manière amovible et non destructive sur la plate-forme (10), **caractérisé en ce que**
le bras robotisé est commandé de manière flexible dans un mode de transport délicat (S20) pendant un mouvement de transport de la plateforme, en particulier lorsque l'effecteur terminal (21) est libre, afin de réduire les accélérations, en particulier les vibrations, de la plateforme.

2. Procédé selon la revendication 1, **caractérisé en ce que**, dans le mode de transport délicat, une charge est détectée dans au moins une articulation du bras robotisé et un mouvement de l'articulation est actualisé (S20) sur la base de cette charge détectée.

3. Procédé selon l'une des revendications précédentes, **caractérisé en ce que** le bras robotisé est commandé par impédance dans le mode de transport délicat (S20).

4. Procédé selon l'une des revendications précédentes, **caractérisé en ce que**, dans le mode de transport délicat, le bras robotisé est commandé sur la base d'une pose de référence (S20).

5. Procédé selon l'une des revendications précédentes, **caractérisé en ce que** le bras robotisé (20) comporte au moins six axes, en particulier au moins sept axes.

6. Procédé selon l'une des revendications précédentes, **caractérisé en ce que** la plateforme (10) comporte un train de roulement, notamment avec au moins une roue (11) omnidirectionnelle ou orientable.

7. Procédé selon l'une des revendications précédentes, **caractérisé en ce que** les marchandises transportées sont stockées dans au moins un récipient (40), notamment étanche, qui est disposé de manière amovible et non destructive sur la plateforme (10).

8. Procédé selon la revendication précédente, **caractérisé en ce que** le bras robotisé (209) manipule le récipient (40) avant et/ou après le mode de transport délicat, notamment en le disposant sur un sas et/ou en le chargeant sur la plateforme et/ou en le déchargeant de celle-ci (S30) .

9. Robot agencé pour mettre en œuvre un procédé selon la revendication 1 et comportant une plateforme mobile (10), un bras robotisé multiaxes (20) et une commande (30) pour commander des systèmes d'entraînement du bras robotisé, les marchandises transportées étant stockées dans un ou plusieurs récipients (40) disposés de manière amovible et non destructive sur la plateforme (10), **caractérisé en ce que**
la commande présente un mode de transport délicat dans lequel le bras robotisé est commandé de manière flexible pendant un mouvement de transport de la plate-forme, en particulier lorsque l'effecteur d'extrémité (21) est libre, afin de réduire les accélérations, en particulier les vibrations, de la plate-forme.

10. Produit programme d'ordinateur comprenant un code de programme stocké sur un support lisible par un ordinateur, pour la mise en œuvre d'un procédé selon l'une quelconque des revendications 1 à 8.
